(19) **Europäisches Patentamt / European Patent Office / Office européen des brevets**

(11) **EP 2 951 411 B1**

(12) **FASCICULE DE BREVET EUROPEEN**

(45) Date de publication et mention
de la délivrance du brevet:
**13.12.2017 Bulletin 2017/50**

(21) Numéro de dépôt: **14705815.0**

(22) Date de dépôt: **16.01.2014**

(51) Int Cl.:
***F01N 11/00*** *(2006.01)*

(86) Numéro de dépôt international:
**PCT/FR2014/050081**

(87) Numéro de publication internationale:
**WO 2014/118452 (07.08.2014 Gazette 2014/32)**

(54) **PROCÉDÉ DE DIAGNOSTIC D'UN FILTRE À PARTICULES AU MOYEN D'UN CAPTEUR DE SUIES**

VERFAHREN ZUR DIAGNOSE EINES PARTIKELFILTERS MITTELS EINER RUSSERFASSUNGSVORRICHTUNG

METHOD FOR DIAGNOSING A PARTICLE FILTER BY MEANS OF A SOOT CAPTURING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2013 FR 1300184**

(43) Date de publication de la demande:
**09.12.2015 Bulletin 2015/50**

(73) Titulaires:
• **IFP Energies nouvelles**
**92500 Rueil-Malmaison (FR)**
• **Electricfil Automotive**
**01708 Miribel Cedex (FR)**

(72) Inventeurs:
• **YOUSSEF, Bilal**
**F-69100 Villeurbanne (FR)**
• **CREFF, Yann**
**F-38138 Les Côtes D'Arey (FR)**

(56) Documents cités:
**WO-A1-2011/135718      JP-A- 2007 315 275**

## Description

La présente invention concerne le domaine de la réduction de la pollution générée par les moteurs Diesel au moyen de filtres à particules.

De nos jours, les contraintes réglementaires sur les émissions polluantes sont de plus en plus sévères pour les véhicules Diesel, notamment en ce qui concerne les émissions de particules. Malgré les progrès significatifs dans ce domaine, notamment via le développement des filtres à particules, il subsiste des préoccupations sur ces émissions, en particulier pour le diagnostic embarqué tout au long de la vie d'un véhicule. En effet, avec le temps, le filtre à particules peut ne pas accomplir correctement sa fonction suite à différents types de défaillances, ce qui amène un dépassement du seuil limite des émissions. Dans ce cas, un signal d'alarme fourni par un algorithme de diagnostic doit être généré, indiquant la nécessité de changer le filtre défaillant.

Les méthodes de diagnostic actuelles basées sur la mesure de la perte de charge aux bornes du filtre à particules ne seront pas en mesure de répondre aux futures normes, qui seront de plus en plus contraignantes (le seuil limite des émissions ne cesse de diminuer). Pour répondre aux futures normes, un capteur de suies placé en aval du filtre à particules devient indispensable pour la majorité des véhicules Diesel.

D'autres méthodes de diagnostic sont basées sur l'utilisation d'estimateurs et de modèles, qui demandent beaucoup de calibrations, ce qui nécessite un temps élevé et a un coût important. De plus, les méthodes de diagnostic avec modèles présentent des sources de dispersions importantes. Par ailleurs, la demande de brevet US 2010/0180669 A1 décrit une autre méthode de diagnostic de filtre à particules n'utilisant pas de modèle. Pour cette méthode, une défaillance est diagnostiquée sur la base d'une comparaison d'une valeur fonction de grandeurs caractéristiques du fonctionnement du moteur avec un premier seuil et d'une comparaison d'un signal de capteur de suie avec un deuxième seuil adaptable. La comparaison avec deux seuils (dont un seuil adaptable) rend cette méthode complexe.

La demande de brevet EP 2565405 décrit un procédé de détection de défaillance d'un filtre à particules au moyen d'un capteur de particules. La détection de la défaillance est basée sur la comparaison de la résistance du capteur après une période déterminée avec un seuil de résistance.

Pour résoudre ces problèmes, l'invention concerne un procédé de diagnostic d'un filtre à particules au moyen d'un capteur de suies, le procédé étant basé sur l'exploitation directe du signal temporel fourni par le capteur de suies et l'utilisation des grandeurs disponibles dans l'unité de commande du moteur thermique. Ces données permettent une classification d'un indicateur corrélé à la quantité cumulée de suie (résidu) dans un espace multidimensionnel. En fonction de la classification, on détermine l'existence d'une défaillance du filtre à particules. Ainsi, le procédé permet un diagnostic robuste, simple à mettre en oeuvre et à calibrer.

### Le procédé selon l'invention

L'invention concerne un procédé de diagnostic d'un filtre à particules intégré dans un circuit d'échappement d'un moteur thermique, dans lequel on acquiert un signal d'un capteur de suie disposé en aval dudit filtre à particules, ledit signal du capteur étant composé de plusieurs temps de chargement dudit capteur de suie correspondant au temps d'accumulation de suie jusqu'à la régénération dudit capteur de suie, caractérisé en ce que :

- on construit un espace multidimensionnel dont une dimension correspond à un indicateur déterminé au moyen dudit signal de capteur et dont les autres dimensions correspondent à au moins un paramètre lié aux conditions de fonctionnement dudit moteur ; puis, pour chaque temps de chargement dudit capteur de suie :

  - on détermine une valeur dudit indicateur au moyen dudit signal du capteur de suies durant ledit temps de chargement ;
  - on détermine les valeurs desdits paramètres pendant ledit temps de chargement dudit capteur de suies ;
  - on détermine la position d'un point dans ledit espace multidimensionnel au moyen des valeurs dudit indicateur et desdits paramètres ; et

on réalise le diagnostic de l'état dudit filtre à particules en fonction de la position dudit point dans ledit espace multidimensionnel.

Selon l'invention, on définit à partir de données d'apprentissage au moins une première zone comprenant uniquement des points correspondant à une défaillance dudit filtre à particules, et une deuxième zone comprenant uniquement des points correspondant à un fonctionnement nominal dudit filtre à particules, et on réalise le diagnostic dudit filtre à particules en fonction de la position dudit point par rapport auxdites zones.

De préférence, on diagnostique une défaillance dudit filtre à particules si ledit point appartient à ladite première zone.

Avantageusement, on définit dans ledit espace multidimensionnel une troisième zone distincte desdites première et deuxième zones, ladite troisième zone comprenant des points correspondant à un fonctionnement nominal dudit filtre à particules et des points correspondant à une défaillance dudit filtre à particules, pour un point situé dans ladite troisième zone on diagnostique une défaillance dudit filtre à particules si la différence entre le nombre de points correspondant à une défaillance et le nombre de points correspondant à un fonctionnement nominal disposés à une distance inférieure à $R_v$

dudit point à analyser est supérieure à un seuil $S_v$ prédéterminé.

De manière avantageuse, on alerte l'utilisateur et/ou l'unité de commande dudit moteur dudit moteur si au moins une défaillance dudit filtre à particules est diagnostiquée.

Selon un mode de réalisation de l'invention, ledit indicateur correspond au temps de chargement dudit signal dudit capteur de suie ou à l'intégrale, la valeur moyenne, la pente moyenne dudit signal du capteur de suies pendant ledit temps de chargement.

Avantageusement, lesdits paramètres sont fonction des grandeurs mesurées pour le contrôle dudit moteur.

De préférence, lesdites grandeurs mesurées sont choisies parmi le couple demandé, le régime du moteur, le débit d'air, la pression d'admission et la pression d'échappement.

Selon un mode de réalisation de l'invention, l'espace multidimensionnel est de dimension 3 et les paramètres sont les intégrales du couple demandé et du régime dudit moteur.

En outre, on peut changer ledit filtre à particules si on diagnostique au moins une défaillance dudit filtre à particules.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre les différentes étapes du procédé selon l'invention.
La figure 2 représente un exemple de signal simulé émis par un capteur de suies.
La figure 3 est une représentation 3D de la classification en trois zones selon un mode de réalisation de l'invention.
La figure 4 représente un exemple illustratif pour l'application du critère de voisinage.
La figure 5 est une représentation d'un espace tridimensionnel pour un exemple selon l'invention.
La figure 6 correspond à la représentation de la figure 5, sur laquelle on a ajouté la définition des première, deuxième et troisième zones.
La figure 7 correspond à la représentation de la figure 5, sur laquelle on a placé trois points à diagnostiquer.

**Description détaillée de l'invention**

L'invention concerne un procédé de diagnostic d'un filtre à particules intégré dans un circuit d'échappement d'un moteur Diesel. Pour ce procédé, un capteur de suies est disposé en aval du filtre à particules dans le sens de circulation des gaz d'échappement. Ce capteur de suies génère un signal électrique représentatif de la quantité de particules (suies) dans les gaz d'échappement.

On parle de défaillance lorsque le filtre à particules n'accomplit pas correctement sa fonction, ce qui engendre un dépassement du seuil limite des émissions. Cette défaillance peut être liée à un encrassement du filtre. Dans ce cas, il est nécessaire de changer le filtre défaillant.

Le diagnostic correspond à l'étude de l'état du filtres à particules, par ce diagnostic on vérifie notamment s'il est défaillant ou s'il fonctionne de manière optimale.

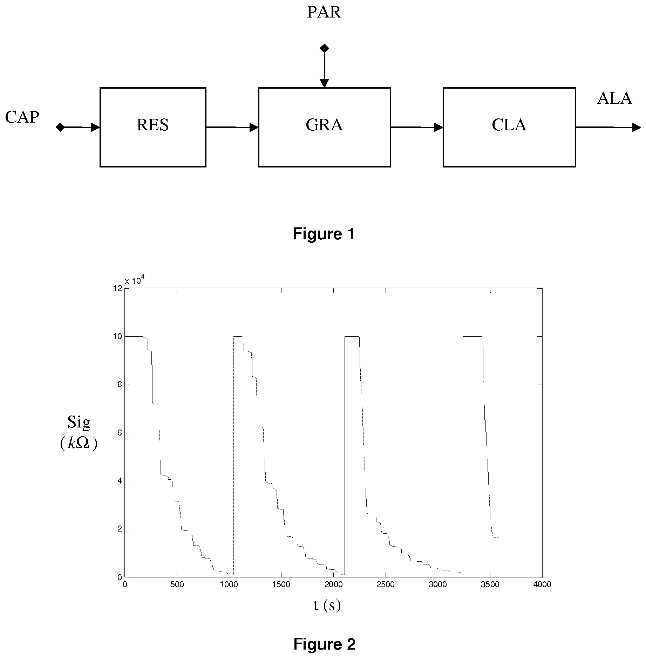

La figure 1 montre un schéma général du procédé de diagnostic illustrant les différentes étapes nécessaires au diagnostic d'une défaillance du filtre à particules à partir du signal du capteur de suies (CAP) et de paramètres (PAR), appelés également conditions opératoires, définis à partir des grandeurs mesurées. Dans une première étape, un indicateur appelé résidu (RES) dépendant de l'état du filtre est généré à partir du signal capteur (CAP). Ensuite le résidu généré est projeté dans un repère multidimensionnel lié aux conditions opératoires (GRA), par exemple 2D ou 3D. La dernière étape consiste à diagnostiquer l'état du filtre à particules au moyen d'une classification (CLA). Facultativement, un signal d'alarme (ALA) peut être généré si au moins une défaillance du filtre à particules est détectée. Le procédé selon l'invention est simple à implémenter et a l'avantage de n'utiliser ni estimateur de suies en sortie du moteur, ni modèles de composants (capteur et filtre).

Afin de mettre en oeuvre les étapes décrites ci-dessus, on peut réaliser au préalable les deux opérations suivantes :

- construction d'un espace multidimensionnel, et
- définition de zones dans l'espace multidimensionnel.

Construction de l'espace multidimensionnel

Pour la représentation (qui peut être graphique) (GRA), on définit un espace multidimensionnel dans lequel sont projetées les données mesurées : un indicateur (appelé aussi résidu) corrélé à la quantité de suies et au moins un paramètre. L'espace multidimensionnel est par définition au moins de dimension 2.

Le capteur de suies placé en aval du filtre à particules fournit un signal résistif $S_r$ qui est fonction des suies accumulées. En l'absence de suies captées, le signal capteur correspond à une valeur maximale $S_r^{max}$. Quand le signal fourni atteint un seuil minimal $S_r^{min}$ correspondant à une accumulation de suies maximale, une régénération du capteur est forcée, ce qui fait remonter le signal fourni à sa valeur maximale $S_r^{max}$. Un exemple du signal capteur est illustré sur la figure 2. Sur cette figure 2, on a représenté le signal (Sig en $k\Omega$) en fonction du temps (t en s). Le temps durant lequel le signal capteur passe de sa valeur maximale à sa valeur minimale est appelé temps de chargement $T_c$.

Un résidu R (ou indicateur de défaut) est calculé à partir du signal capteur de suies durant le temps de chargement. Le résidu calculé peut correspondre au temps de chargement ou à une fonction des données du capteur de suies durant le temps de chargement telles que l'intégrale, la valeur moyenne, la pente moyenne de ce signal. Le résidu est donc corrélé avec la quantité de particules en aval du filtre à particules. Notamment, un temps de chargement faible traduit une quantité importante de particules.

Les paramètres sont des fonctions des grandeurs mesurées (conditions opératoires) pour la commande du moteur. Ces paramètres définissent des conditions opératoires pour les différents cycles de roulage. Il peut s'agir par exemple du couple demandé, du régime moteur, du débit d'air, de la pression d'admission, de la pression d'échappement ou toute autre grandeur disponible dans l'unité de commande. Les fonctions mises en oeuvre pour le calcul des paramètres peuvent être la valeur moyenne ou l'intégrale de la grandeur mesurée pour la durée du signal du capteur de suie, c'est-à-dire durant le temps de chargement du capteur de suies.

Selon un mode de réalisation de l'invention, l'espace multidimensionnel est de dimension 3 et les paramètres sont les intégrales du couple demandé et du régime moteur.

On construit donc un espace multidimensionnel, pour lequel un axe du repère correspond au résidu généré à partir du signal du capteur, les autres axes correspondant aux paramètres (c'est-à-dire des fonctions des grandeurs mesurées).

Définition des zones

Dans cet espace multidimensionnel, on définit au moins deux zones : une première zone (Z1), dite zone de défaillance et une deuxième zone (Z2) dite zone nominale.

Ces deux zones discriminables Z1 et Z2 sont définies de telle sorte qu'il n'y ait que des points nominaux dans Z2 et que des points défaillants dans Z1. Un critère d'appartenance à ces zones discriminables peut être défini comme par exemple la position par rapport à des seuils de coordonnées fixant les limites de chaque zone, par la définition d'un hyperplan (par exemple un plan en dimension 3) ou par d'autres contraintes de coordonnées. Ce critère d'appartenance peut être défini par un algorithme d'optimisation ou manuellement, de telle sorte que la zone Z1 comprenne uniquement des points défaillants et que la zone Z2 comprenne uniquement des points nominaux.

Ces deux zones peuvent être construites à partir des données d'apprentissage contenant le signal capteur et les paramètres définissant les conditions opératoires pour différents cycles de roulage répétés dans différentes conditions (température et pression extérieures, altitude...). La zone nominale correspond à des données obtenues avec un filtre considéré comme nominal (par exemple une fuite en deçà du seuil d'homologation défini par la norme) et la classe défaillante correspond à des données obtenues avec un filtre considéré comme défaillant (par exemple une fuite (filtre) proche ou au delà du seuil de diagnostic défini par la norme).

Selon un mode de réalisation du procédé selon l'invention, on peut également définir une troisième zone (Z3), dite zone d'ambigüité. La troisième zone Z3 comprend les points ne faisant pas partie des zones discriminables. Cette troisième zone comprend donc à la fois des points correspondant à un fonctionnement nominal du filtre à particules et des points correspondant à une défaillance de celui-ci. Les données de ces deux ensembles peuvent éventuellement être traités dans le but de réduire le nombre de points utilisés par l'algorithme de diagnostic.

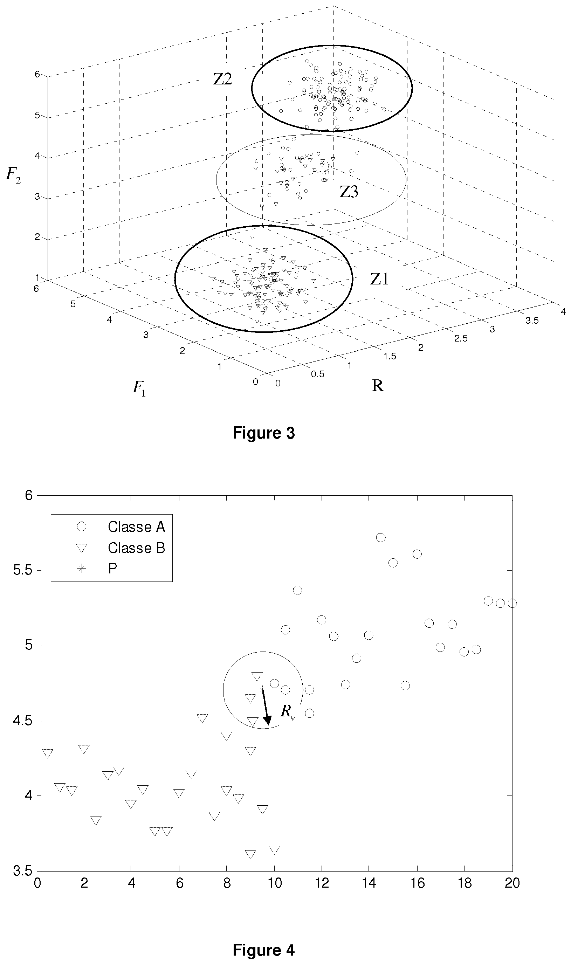

La figure 3 représente un exemple d'espace tridimensionnel dans lequel on a représenté les trois zones. Les axes de ce graphique correspondent au résidu (R), et à deux paramètres ($F_1$, $F_2$) liés aux grandeurs mesurées. Sur ce graphe et pour les figures suivantes, les points correspondant au fonctionnement nominal sont représentés par des cercles, et les points correspondant à des défaillances sont représentés par des triangles. On remarque que les trois zones sont bien disjointes, que la première zone (Z1) comprend uniquement des points défaillants, que la deuxième zone (Z2) comprend uniquement des points nominaux, et que la troisième zone (Z3) comprend à la fois des points défaillants et des points nominaux.

Une fois l'espace multidimensionnel construit et les différentes zones définies, on réalise les étapes suivantes (cf. figure 1) pour chaque temps de chargement du signal du capteur de suies :

- génération du résidu (RES),
- détermination des paramètres (PAR),
- incorporation dans l'espace multidimensionnel (GRA),
- classification (CLA), et
- génération d'un signal d'alarme (ALA).

Génération du résidu

De la même manière que pour la génération de l'espace multidimensionnel, on détermine, pour chaque temps de chargement du signal du capteur de suies, un indicateur : le résidu R (indicateur de défaut) qui est calculé à partir du signal capteur de suies durant le temps de chargement et qui peut correspondre au temps de chargement ou toute fonction des données cumulées du capteur durant le chargement comme l'intégrale, la valeur moyenne, la pente moyenne du signal du capteur.

Détermination des paramètres

Pour chaque temps de chargement du capteur de suie, on détermine les valeurs des paramètres définis pour l'espace multidimensionnel en fonction des grandeurs mesurées pendant le temps de chargement.

## Incorporation dans l'espace multidimensionnel

Les données déterminées précédemment (résidu et paramètres) permettent de générer un point dans l'espace multidimensionnel.

Ce point peut être projeté dans un repère correspondant à l'espace multidimensionnel, tel que le repère illustré en figure 3.

## Classification

Lors de cette étape, un point P de coordonnées $(x_p, y_p, z_p$ dans le cas 3D) placé dans l'espace multidimensionnel et ne faisant pas partie des données d'apprentissage est affecté à la classe nominale ou à la classe défaillante en fonction de sa position dans l'espace multidimensionnel, le cas échéant en fonction de sa position par rapport aux différentes zones définies. On note que le point P à classifier est construit à partir du signal capteur et des données du moteur prises avec un filtre dont l'état est inconnu pour l'algorithme de diagnostic et qui peut être nominal ou défaillant.

Dans le cas où on a défini au moins deux zones Z1 et Z2, le filtre est considéré nominal si le point P est affecté à la zone nominale (Z2) et défaillant si le point P est affecté à la zone défaillante (Z1).

Le point P est affecté à la classe nominale si les coordonnées $(x_p, y_p, z_p)$ vérifient les conditions d'appartenance à la deuxième zone Z2. Dans ce cas, le filtre correspondant à ce point est considéré comme nominal.

Le point P est affecté à la classe défaillante si les coordonnées $(x_p, y_p, z_p)$ vérifient les conditions d'appartenance à la première zone Z1 . Dans ce cas, le filtre correspondant à ce point est considéré comme défaillant.

Selon le mode de réalisation dans lequel on définit une troisième zone Z3, dite zone d'ambiguïté, on classe un point P situé dans cette troisième zone Z3 selon un critère de voisinage par rapport aux points nominaux et défaillants à proximité du point P. Un exemple de critère de voisinage est donné dans la démarche suivante pour le cas tridimensionnel :

- On définit un voisinage $V^p$ du point $P(x_p, y_p, z_p)$ par une sphère de centre P et de rayon $R_v$ défini comme suit :

$$(x - x_p)^2 + (y - y_p)^2 + (z - z_p)^2 = R_v^2$$

$R_v$ est un paramètre prédéterminé réglable qui est utilisé pour la calibration de l'algorithme de diagnostic.

- On compte le nombre $N_{nom}$ de points $(x, y, z)$ faisant partie de l'ensemble des points nominaux et qui sont à l'intérieur de ce voisinage. $N_{nom}$ : nombre de $(x, y, z)$ nominaux tel que

$$(x - x_p)^2 + (y - y_p)^2 + (z - z_p)^2 < R_v^2$$

- On compte le nombre $N_{def}$ des points $(x, y, z)$ faisant partie de l'ensemble des points défaillants à l'intérieur de ce voisinage :

$N_{def}$ : nombre de $(x, y, z)$ défaillants tel que

$$(x - x_p)^2 + (y - y_p)^2 + (z - z_p)^2 < R_v^2$$

- L'affectation du point P à une des deux classes se fait comme suit :

  ◦ P est considéré comme un point défaillant si $N_{def} - N_{nom} > S_v$, le filtre correspondant est alors considéré comme défaillant
  ◦ P est considéré comme un point nominal *si* $N_{def} - N_{nom} \leq S_v$, le filtre correspondant est alors considéré comme nominal

$S_v$ est un seuil réglable qui est utilisé pour la calibration de l'algorithme de diagnostic. La figure 4 illustre un exemple de critère de voisinage dans le cas bidimensionnel. Dans le cercle de centre P et de rayon $R_v$, on dénombre deux points de classe A et trois points de classe B. Si on considère que la classe B est la classe défaillante $N_{def} - N_{nom} = 1$, donc si le seuil $S_v$ est fixé à une valeur négative ou nulle, le point P est considéré comme défaillant et si le seuil $S_v$ est fixé à une valeur supérieure ou égale à 1, le point P est considéré comme nominal.

$R_v$ et $S_v$ sont deux paramètres de calibration prédéterminés. Ils sont déterminés en fonction d'objectifs prédéterminés de non-détection de défaillance et de fausses alertes. Avantageusement, le seuil $S_v$ peut être compris entre 0 et 5. Une valeur importante du seuil $S_v$ correspond à une pondération des fausses alertes, le procédé est alors robuste par rapport aux fausses alertes au détriment des non-détections.

## Génération d'un signal d'alarme

Un signal d'alarme est généré par le procédé de diagnostic, lorsqu'un ou plusieurs points mesurés sont considérés comme défaillants. Ce signal d'alarme peut permettre de prévenir l'utilisateur du véhicule de l'état du filtre à particules, il peut aussi permettre d'alerter l'unité de commande du moteur d'une défaillance dans le but d'adapter la commande du moteur à l'état du filtre à particules. Avantageusement, le nombre de défaillances $P_{def}$ à détecter (défaillances successives ou sur une période de temps fixée a priori) avant de générer le signal d'alarme fournit un degré de liberté supplémentaire pour atteindre les objectifs prédéterminés de non-détection de défaillance et de fausses alertes. Selon un mode de réalisation, le nombre de défaillances $P_{def}$ peut être modulé en fonction de l'appartenance du point aux zones Z1, Z2, ou Z3. Ce signal d'alarme peut être un signal binaire. Il peut permettre d'allumer un voyant sur le tableau de bord du véhicule équipé du moteur Diesel.

Si un signal d'alarme est généré, alors on peut procéder au remplacement du filtre à particules.

Le procédé selon l'invention trouve son application dans le domaine des véhicules, notamment des véhicules automobiles.

Contrairement à des méthodes alternatives qui nécessitent un modèle du filtre, un modèle du capteur et/ou un estimateur de suies sortie moteur, ce qui demande beaucoup de calibrations et complique la tâche de diagnostic du filtre à particules à cause des différentes dispersions (modèles et estimateur), le procédé proposé ici n'utilise ni estimateur de suies, ni modèles composants (capteur et filtre) et est basé sur l'exploitation directe du signal temporel fourni par le capteur de suies et l'utilisation de grandeurs mesurées disponibles.

La projection du résidu dans un repère lié aux conditions opératoires, rend le diagnostic par ce procédé robuste aux changements de cycles de roulage, ce qui permet son application pour passer les tests d'homologation OBD (on-board diagnostic : diagnostic embarqué) ainsi que pour le diagnostic embarqué du filtre à particules au cours de la vie réelle du véhicule.

Le procédé de diagnostic selon l'invention est simple à mettre en oeuvre, il est basé sur des opérations mathématiques élémentaires qui ne demandent pas beaucoup de temps de calcul, ce qui permet son intégration directe dans un microcontrôleur lié au capteur ou son implémentation dans l'unité de commande du véhicule.

Le procédé de diagnostic selon l'invention est facile à calibrer : seulement trois paramètres ($R_v$ et $S_v$ et $P_{def}$) sont nécessaires pour calibrer l'algorithme de diagnostic une fois que sont définis les taux de fausses alertes et de non détections souhaités. En effet, la définition des zones Z1 et Z2 est faite à l'issue de la phase d'apprentissage et n'est pas remise en question lors du choix des deux paramètres $R_v$ et $S_v$.

Exemple illustratif

Cette partie montre un exemple d'utilisation du procédé selon l'invention illustrant les différentes étapes décrites précédemment. Des données de simulation générées avec un filtre nominal et un filtre défaillant pour six cycles de roulages différents sont utilisées pour cet exemple. Des dispersions gaussiennes ont été ajoutées sur les suies en amont du filtre ainsi que sur le signal capteur.

Dans cet exemple, le résidu choisi correspond au temps de chargement, les paramètres $F_1$ et $F_2$ correspondent aux intégrales du couple demandé et du régime moteur durant le temps de chargement.

Une classe nominale est constituée avec des points correspondant aux données générées avec le filtre nominal et une classe défaillante est constituée avec des points correspondant aux données générées avec le filtre défaillant.

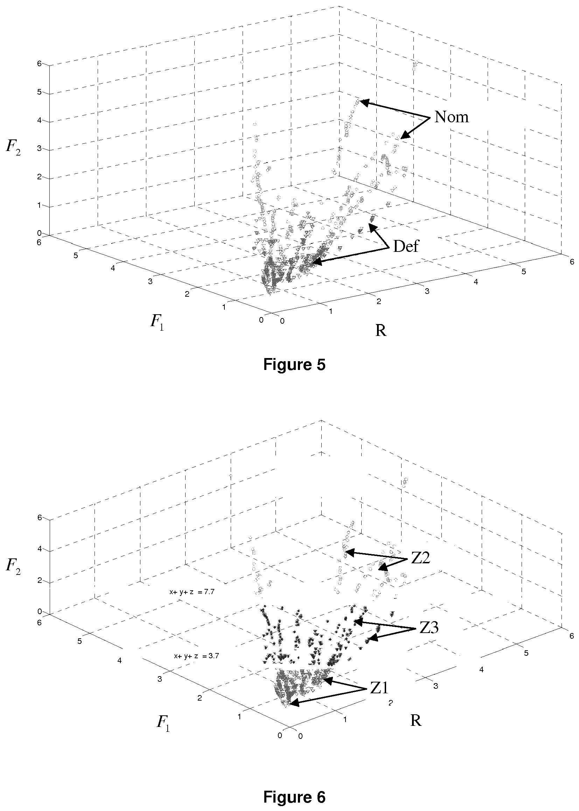

La figure 5 montre les deux classes nominale et défaillante dans un repère 3D liant le résidu aux conditions opératoires (couple demandé, régime moteur).

Deux zones discriminables Z1 et Z2 sont définies par des seuils limites de telle sorte qu'il n'y ait que des points de la classe nominale qui vérifient le seuil de Z2 et que des points défaillants qui vérifient le seuil de Z1.

○ *Z2 correspond à la zone de l'espace 3D vérifiant la contrainte suivante :*

$$x+y+z > 7.7$$

○ *Z1 correspond à la zone de l'espace 3D vérifiant la contrainte suivante :*

$$x+y+z < 3.7$$

Une zone d'ambiguïté Z3 est formée par les points nominaux et défaillants qui ne vérifient pas les critères d'appartenance aux zones discriminables donnés ci dessus.

La figure 6 montre les zones Z1, Z2 et Z3.

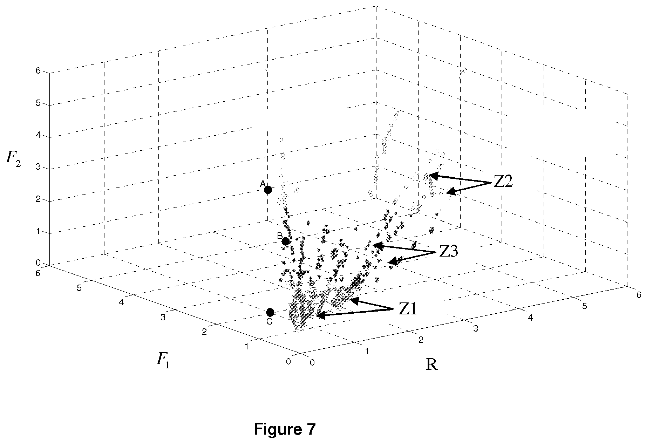

La procédure d'affectation d'un nouveau point à une classe dans les trois cas de figure est illustrée à l'aide des trois points A (4,6,1), B(1.3,2.1,2.1) et C(1,2,0) de la figure 7 :

○ Le point A est affecté à la classe nominale car il vérifie la condition de Z2 *:*

$$x_{A+}y_{A+}\ z_A=11 > 7.7.$$

○ Le point B ne vérifie pas les conditions d'appartenance aux zones discriminables Z1 et Z2, c'est la règle de voisinage par rapport aux points nominaux et défaillants de la zone d'ambiguïté qui s'applique. En prenant par exemple un voisinage de B de rayon $R_v = 0.45$, quatre points défaillants et trois points nominaux se trouvent dans ce voisinage ($N_{def}$ =4 et $N_{nom}$=3). Par conséquent, le point B est affecté à la classe nominale si $S_v \geq 1$, dans le cas contraire il est affecté à la classe défaillante. Par exemple pour $S_v=0$, le point B est considéré défaillant et pour $S_v=1$, le point B est considéré nominal.

○ Le point C est affecté à la classe défaillante car il vérifie la condition de Z1 *:*

$$x_{C+}y_{C+}\ z_C=3 < 3.7.$$

## Revendications

1. Procédé de diagnostic d'un filtre à particules intégré dans un circuit d'échappement d'un moteur thermique, dans lequel on acquiert un signal d'un capteur de suie disposé en aval dudit filtre à particules, ledit signal du capteur étant composé de plusieurs temps de chargement dudit capteur de suie correspondant au temps d'accumulation de suie jusqu'à la régénération dudit capteur de suie, **caractérisé en ce que** :

   - on construit un espace multidimensionnel dont une dimension correspond à un indicateur déterminé au moyen dudit signal de capteur et dont les autres dimensions correspondent à au moins un paramètre lié aux conditions de fonctionnement dudit moteur ;

   puis, pour chaque temps de chargement dudit capteur de suie :

   - on détermine une valeur dudit indicateur au moyen dudit signal du capteur de suies durant ledit temps de chargement ;
   - on détermine les valeurs desdits paramètres pendant ledit temps de chargement dudit capteur de suies ;
   - on détermine la position d'un point dans ledit espace multidimensionnel au moyen des valeurs dudit indicateur et desdits paramètres ; et
   - on réalise le diagnostic de l'état dudit filtre à particules en fonction de la position dudit point dans ledit espace multidimensionnel.

2. Procédé selon la revendication 1, dans lequel on définit à partir de données d'apprentissage au moins une première zone comprenant uniquement des points correspondant à une défaillance dudit filtre à particules, et une deuxième zone comprenant uniquement des points correspondant à un fonctionnement nominal dudit filtre à particules, et on réalise le diagnostic dudit filtre à particules en fonction de la position dudit point par rapport auxdites zones.

3. Procédé selon la revendication 2, dans lequel on diagnostique une défaillance dudit filtre à particules si ledit point appartient à ladite première zone.

4. Procédé selon l'une des revendications 2 ou 3, dans lequel on définit dans ledit espace multidimensionnel une troisième zone distincte desdites première et deuxième zones, ladite troisième zone comprenant des points correspondant à un fonctionnement nominal dudit filtre à particules et des points correspondant à une défaillance dudit filtre à particules, pour un point situé dans ladite troisième zone on diagnostique une défaillance dudit filtre à particules si la différence entre le nombre de points correspondant à une défaillance et le nombre de points correspondant à un fonctionnement nominal disposés à une distance inférieure à $R_v$ dudit point à analyser est supérieure à un seuil $S_v$ prédéterminé.

5. Procédé selon l'une des revendications précédentes, dans lequel on alerte l'utilisateur et/ou l'unité de commande dudit moteur si au moins une défaillance dudit filtre à particules est diagnostiquée.

6. Procédé selon l'une des revendications précédentes, dans lequel ledit indicateur correspond au temps de chargement dudit signal dudit capteur de suie ou à l'intégrale, la valeur moyenne, la pente moyenne dudit signal du capteur de suies pendant ledit temps de chargement.

7. Procédé selon l'une des revendications précédentes, dans lequel lesdits paramètres sont fonction des grandeurs mesurées pour le contrôle dudit moteur.

8. Procédé selon la revendication 7, dans lequel lesdites grandeurs mesurées sont choisies parmi le couple demandé, le régime du moteur, le débit d'air, la pression d'admission et la pression d'échappement.

9. Procédé selon l'une des revendications 1 à 7, dans lequel l'espace multidimensionnel est de dimension 3 et les paramètres sont les intégrales du couple demandé et du régime dudit moteur.

10. Procédé selon l'une des revendications précédentes, dans lequel on change ledit filtre à particules si on diagnostique au moins une défaillance dudit filtre à particules.

## Patentansprüche

1. Verfahren zur Diagnose eines Partikelfilters, der in einer Abgasleitung eines Verbrennungsmotors integriert ist, wobei ein Signal von einem Rußsensor erfasst wird, der nachgelagert nach dem Partikelfilter angeordnet ist, wobei das Signal des Sensors aus mehreren Ladezeiten des Rußsensors besteht, die der Zeit der Rußansammlung bis zur Regeneration des Rußsensors entsprechen, **dadurch gekennzeichnet, dass**:

   - ein mehrdimensionaler Raum erstellt wird, wovon eine Dimension einem Indikator entspricht, der durch das Signal des Sensors bestimmt wird, und dessen andere Dimensionen mindestens einem Parameter entsprechen, der mit den Betriebsbedingungen des Motors verbunden ist;

   dann für jede Ladezeit des Rußsensors:

- ein Wert des Indikators mittels des Signals des Rußsensors während der Ladezeit bestimmt wird,
- die Werte der Parameter während der Ladezeit des Rußsensors bestimmt werden;
- die Position eines Punktes in dem mehrdimensionalen Raum mittels der Werte des Indikators und der Parameter bestimmt wird und
- die Diagnose des Zustands des Partikelfilters in Abhängigkeit von der Position des Punktes in dem mehrdimensionalen Raum erstellt wird.

2. Verfahren nach Anspruch 1, wobei ausgehend von Trainingsdaten mindestens ein erster Bereich, der nur Punkte aufweist, die einem Ausfall des Partikelfilters entsprechen, und ein zweiter Bereich, der nur Punkte aufweist, die einem Nennbetrieb des Partikelfilters entsprechen, bestimmt wird und die Diagnose des Partikelfilters in Abhängigkeit von der Position des Punktes in Bezug auf die Bereiche erstellt wird.

3. Verfahren nach Anspruch 2, wobei ein Ausfall des Partikelfilters diagnostiziert wird, wenn der Punkt zu dem ersten Bereich gehört.

4. Verfahren nach einem der Ansprüche 2 oder 3, wobei in dem mehrdimensionalen Raum ein dritter Bereich bestimmt wird, der von dem ersten und zweiten Bereich verschieden ist, wobei der dritte Bereich Punkte, die einem Nennbetrieb des Partikelfilters entsprechen, und Punkte aufweist, die einem Ausfall des Partikelfilters entsprechen, für einen Punkt, der sich in dem dritten Bereich befindet, ein Ausfall des Partikelfilters diagnostiziert wird, wenn der Unterschied zwischen der Anzahl an Punkten, die einem Ausfall des Partikelfilters entsprechen, und der Anzahl an Punkten, die einem Nennbetrieb entsprechen, die in einem Abstand von dem zu analysierenden Punkt angeordnet sind, der niedriger als $R_v$ ist, höher als ein vorbestimmter Schwellenwert $S_1$ ist.

5. Verfahren nach einem der vorhergehenden Ansprüche, wobei der Benutzer und/oder die Steuereinheit des Motors gewarnt wird/werden, wenn mindestens ein Ausfall des Partikelfilters diagnostiziert wird.

6. Verfahren nach einem der vorhergehenden Ansprüche, wobei der Indikator der Ladezeit des Signals des Rußsensors oder dem Integral, dem Mittelwert oder der mittleren Steigerung des Signals des Rußsensors während der Ladezeit entspricht.

7. Verfahren nach einem der vorangehenden Ansprüche, wobei die Parameter von den Größen abhängen, die für die Kontrolle des Motors gemessen werden.

8. Verfahren nach Anspruch 7, wobei die gemessenen Größen ausgewählt werden aus dem erforderlichen Drehmoment, der Drehzahl des Motors, dem Luftdurchsatz, dem Einlassdruck und dem Auslassdruck.

9. Verfahren nach einem der Ansprüche 1 bis 7, wobei der mehrdimensionale Raum ein dreidimensionaler ist und die Parameter die Integrale des erforderlichen Drehmoments und der Drehzahl des Motors sind.

10. Verfahren nach einem der vorhergehenden Ansprüche, wobei der Partikelfilter ausgetauscht wird, wenn mindestens ein Ausfall des Partikelfilters diagnostiziert wird.

**Claims**

1. A method of diagnosing a particle filter integrated in an exhaust system of a heat engine, wherein a signal is acquired from a soot sensor arranged downstream from said particle filter, said sensor signal being comprised of several load times of said soot sensor corresponding to the soot accumulation time until regeneration of said soot sensor, **characterized in that** it comprises:

- constructing a multidimensional space one dimension of which corresponds to an indicator determined by means of said sensor signal and whose other dimensions correspond to at least one parameter related to the operating conditions of said engine,

then, for each load time of said soot sensor:

- determining a value for said indicator by means of said soot sensor signal during said load time,
- determining the values of said parameters during said load time of said soot sensor,
- determining the position of a point in said multidimensional space by means of the values of said indicators and said parameters, and
- performing diagnosis of the condition of said particle filter according to the position of said point in said multidimensional space.

2. A method as claimed in claim 1, comprising defining from training data at least a first zone containing only points corresponding to a failure of said particle filter, and a second zone containing only points corresponding to a nominal operation of said particle filter, and diagnosis of said particle filter is performed according to the position of said point relative to said zones.

**3.** A method as claimed in claim 2, wherein a failure of said particle filter is diagnosed if said point belongs to said first zone.

**4.** A method as claimed in any one of claims 2 or 3, comprising defining in said multidimensional space a third zone distinct from said first and second zones, said third zone containing points corresponding to a nominal operation of said particle filter and points corresponding to a failure of said particle filter, for a point located in said third zone diagnosing a failure of said particle filter if the difference between the number of points corresponding to a failure and the number of points corresponding to a nominal operation located at a distance less than $R_V$ from the point to be analyzed is greater than a predetermined threshold $S_V$.

**5.** A method as claimed in any one of the previous claims, wherein the user and/or the control unit of said engine is alerted if at least one failure of said particle filter is diagnosed.

**6.** A method as claimed in any one of the previous claims, wherein said indicator corresponds to the load time of said signal of said soot sensor or the integral, the average value, the average slope of said soot sensor signal during said load time.

**7.** A method as claimed in any one of the previous claims, wherein said parameters depend on the quantities measured for the control of said engine.

**8.** A method as claimed in claim 7, wherein said measured quantities are selected from among the requested torque, the engine speed, the air flow, the intake pressure and the exhaust pressure.

**9.** A method as claimed in any one of claims 1 to 7, wherein the multidimensional space is of dimension 3 and the parameters are the integrals of the requested torque and of the speed of said engine.

**10.** A method as claimed in any one of the previous claims, wherein said particle filter is changed if at least one failure of said particle filter is diagnosed.

PAR

CAP → RES → GRA → CLA → ALA

**Figure 1**

**Figure 2**

**Figure 3**

**Figure 4**

**Figure 5**

**Figure 6**

Figure 7

**EP 2 951 411 B1**

## RÉFÉRENCES CITÉES DANS LA DESCRIPTION

### Documents brevets cités dans la description

- US 20100180669 A1
- EP 2565405 A